# EUROPÄISCHE PATENTSCHRIFT

(11) **EP 3 451 788 B1**
(45) Veröffentlichungstag und Bekanntmachung des Hinweises auf die Patenterteilung: **22.07.2020**
(21) Anmeldenummer: 17188901.7
(22) Anmeldetag: 31.08.2017
(51) Int. Cl.: H04W 88/06, H04L 12/803, H04L 12/54, H04W 28/08

(54) **TECHNIKEN ZUR STEUERUNG EINER HYBRIDEN NETZWERKZUGANGSENTITÄT**
TECHNOLOGY FOR CONTROLLING A HYBRID NETWORK ACCESS ENTITY
TECHNIQUES DE COMMANDE D'UNE ENTITÉ HYBRIDE D'ACCÈS AU RÉSEAU

(43) Veröffentlichungstag der Anmeldung: 06.03.2019
(73) Patentinhaber: Deutsche Telekom AG, 53113 Bonn (DE)
(72) Erfinder: Kunze, Rüdiger, 16552 Schildow (DE); Kolbe, Hans-Jörg, 64295 Darmstadt (DE); Zimmermann, Gerd, 64331 Weiterstadt (DE); Soukup, Robert, 60594 Frankfurt (DE); Haag, Thomas, 63110 Rodgau (DE)
(74) Vertreter: Braun-Dullaeus Pannen Emmerling Patent- & Rechtsanwaltspartnerschaft mbB

(56) Entgegenhaltungen:
- KR-A- 20170 036 956
- US-A1- 2013 265 879
- US-A1- 2015 312 831

## Beschreibung

Die vorliegende Erfindung betrifft Techniken zur intelligenten Steuerung einer hybriden Netzwerkzugangsentität, insbesondere eine Zugangssteuerungsentität und ein Verfahren zur Steuerung eines Home Gateways und ein Zugangssteuerungssystem zum Steuern des Zugangs einer Kommunikationseinrichtung zu einem Kommunikationsnetz unter Verwendung der hybriden Netzwerkzugangsentität bzw. des Home Gateways.

Die gleichzeitige Nutzung unterschiedlicher Zugangs (Access)-Technologien z.B. die Kombination von xDSL (Digitales Teilnehmerleitungsprotokoll) und LTE (Long Term Evolution, Mobilfunkstandard) zur Erhöhung der Bandbreite des Kunden bzw. Nutzers wird immer stärker nachgefragt. Gleichzeitig ergeben sich neue Einsatzszenarien, die für eine Bündelung verschiedener Zugangstechnologien sprechen. So kann beispielsweise mit relativ kurzen Bereitstellungszeiten bei LTE eine schnelle Anbindung an das Netz erreicht werden.

All diese Nutzungsvarianten können dazu führen, dass bei knappen Funkressourcen mobile Nutzer und Hybrid Nutzer (d.h. Nutzer, denen mehrere Zugangstechnologien, z.B. LTE und xDSL zur Verfügung stehen) um die gleichen Ressourcen konkurrieren. Dies führt dazu, dass Hybrid-Nutzung heute nur an Standorten mit statistisch ausreichender Kapazität eingesetzt werden.

Heutige Home Gateways sind üblicherweise nur für Datenverkehr, d.h. hier Internetanwendungen vorgesehen. Verwaltete Dienste wie TV und Sprache werden üblicherweise ausschließlich über das Festnetz, d.h. hier xDSL geführt. Der LTE-Zugang im Hybrid Modus des Home Gateways verfügt über eine niedrige QoS (Dienstqualität) - Klasse, so dass im Fall von Blockierungen im mobilen Zugangsnetz gegebenenfalls Verkehr verworfen wird. Dies kann im schlimmsten Fall dazu führen, dass Pakete erneut gesendet werden müssen. Darüber hinaus kann es beim Neuaushandeln der Verteilstrategie (Policy) zum Flattern der Verbindung kommen, was negativ für den gesamten gebündelten Zugang ist und zu einem weiteren Absinken der Zugangsbandbreite führen kann. Aktuell verfügbare Home Gateways werden lediglich mit zwei gebündelten Zugangsnetztechnologien angeboten, diese sind LTE und xDSL.

Die Druckschrift US 2015/312831 A1 betrifft dynamische Algorithmen zur WLAN/zellulären Leistungsschätzung, Auswahlselektion und Verkehrsentlastung. Es werden Verfahren beschrieben, welche den Durchsatz des drahtlosen Netzwerks für die Verkehrsentlastung messen bzw. schätzen.

Die Druckschrift KR 2017 0036956 A betrifft ein Kommunikationssystem mit einem UE, das bei einem Handover von einem E-UTRAN Netzwerk zu einem WLAN Netzwerkumschaltet, um den Datenverkehr zu einem CN Rechner zu leiten.

Die Druckschrift US 2013/265879 A1 betrifft ein QCI (Quality of Service Class Indicator) basiertes Offloading-Verfahren, das von einem UE 150 ausgeführtwird. Das UE 150 empfängt eine ANDSF (Access Network Selection and Discovery Function) Regel mit QCI basierter Auswahlinformation über eines der Netzwerkinterfaces. Der Prozessor des UE wählt eines der Netzwerk-Interfaces basierend auf dieser im Speicher gespeicherten Auswahlinformation aus und überträgt Daten mit entsprechendem QCI über dieses ausgewählte Interface.

Es ist die Aufgabe der vorliegenden Erfindung, ein Konzept zur intelligenten Nutzung der zur Verfügung stehenden Bandbreite für das Home Gateway zu schaffen, insbesondere für das oben genannte Szenario, dass sowohl Mobilfunknutzer als auch Hybrid-Nutzer um die Ressourcen der Funkschnittstelle konkurrieren.

Diese Aufgabe wird durch die Merkmale der unabhängigen Ansprüche gelöst. Vorteilhafte Weiterbildungsformen sind Gegenstand der abhängigen Ansprüche.

Eine grundlegendes Konzept der Erfindung besteht darin, sicherzustellen, dass mobile Nutzer in Fällen von Ressourcenknappheit weiter mit Funkressourcen versorgt werden und bei Kunden bzw. Nutzern, die hybride Technologien nutzen, die Bandbreite auf ein Minimum reduziert wird, dies aber explizit dem Home Gateway mitgeteilt wird. Somit kann eine Bündelung von unterschiedlichen Zugangsnetzen flächendeckend bereitgestellt werden.

Die explizite Benachrichtigung des Home Gateways im Falle einer Blockierung oder drohenden Blockierung der Radioverbindung (Funkverbindung) wirkt proaktiv und kann bei entsprechend eingestelltem Schwellwert das Verwerfen von Paketen verhindern. Weiterhin lässt sich nach gewisser Latenz ein Rückschalten in den initialen Zustand problemlos realisieren, wenn der Schwellwert auf dem Radiolink wieder unterschritten wird. Gleichzeitig lassen sich sukzessive weitere Hybridteilnehmer wieder auf das Initialszenario gesteuert zurückschalten.

Darüber hinaus besteht die Möglichkeit, ein "Handover" zu einer alternativen Funkzelle zu initiieren. Auch dies kann proaktiv eine Blockierung des Radiolinks verhindern.

Im Folgenden werden verschiedene Zugangstechnologien für die Funkschnittstelle beschrieben, insbesondere für den Zugang über das Mobilfunknetz und Zugang über das Festnetz. Bei dem Mobilfunknetz kann es sich beispielsweise um ein Mobilfunknetz eines Mobilfunkbetreibers handeln, d.h. ein zelluläres Netz, beispielsweise unter Verwendung eines Mobilfunkstandards wie z.B. 5G, LTE, UMTS, GSM, etc. Bei dem Festnetz kann es sich beispielsweise um ein Telefonnetz eines Telefonbetreibers handeln, d.h. ein drahtgebundenes Netz, wie beispielsweise ein POTS, ISDN, xDSL oder ein Kabel-Netz.

Der Zugang zu dem Festnetz kann über ein drahtloses Nahbereichsnetz erfolgen, wie z.B. WLAN oder Bluetooth. Als Protokolle zur Datenübertragung können beispielsweise IPv4 oder IPv6 genutzt werden. Eine gesicherte Übertragung kann über das Protokoll TCP/IP erfolgen, das im IP-Stack verfügbar ist.

In der folgenden Beschreibung werden Netzwerkentitäten bzw. Netzwerkknoten beschrieben, z.B. Zugangssteuerungsentitäten und hybride Netzwerkzugangsentitäten. Bei einer Netzwerkentität handelt es sich um eine Vorrichtung, die eine spezielle Funktion ausführen kann, z.B. eine Zugangssteuerfunktionalität, eine Gateway- oder Router-Funktionalität oder eine Lastreduktionsfunktion, und entweder in Hardware oder in Software realisiert sein kann. Die Netzwerkentität kann Hardware und/oder Software umfassen, um die technischen Funktionen, wie unten beschrieben, bereitzustellen. Eine Netzwerkentität kann Mikroprozessoren, Mikrochips, ASICs und/oder DSPs umfassen. Die Netzwerkentität kann beispielsweise über ein Modem, eine Netzwerkkarte, einen Netzwerkabschluss oder einen Netzwerkadapter verfügen. Die Netzwerkentität kann als separat stehende physikalische Einheit aufgestellt sein oder sie kann sich in der Cloud befinden. Unter Cloud bzw. Cloud Computing ist hier der Ansatz zu verstehen, abstrahierte IT-Infrastrukturen wie beispielsweise Rechenkapazität, Datenspeicher, Netzwerkkapazitäten, fertige Software oder hier den Server dynamisch an den Bedarf angepasst über ein Netzwerk zur Verfügung zu stellen.

Die im Folgenden vorgestellten Verfahren und Systeme können von verschiedener Art sein. Die einzelnen beschriebenen Elemente können durch Hardware- und/oder Softwarekomponenten realisiert sein, beispielsweise elektronische Komponenten, die durch verschiedene Technologien hergestellt werden können und zum Beispiel Halbleiterchips, ASICs, Mikroprozessoren, digitale Signalprozessoren, integrierte elektrische Schaltungen, elektrooptische Schaltungen und/oder passive Bauelemente umfassen.

Gemäß einem ersten Aspekt betrifft die Erfindung eine Zugangssteuerungsentität zur Steuerung einer hybriden Netzwerkzugangsentität, insbesondere eines Home Gateways, welche ausgebildet ist, einer Kommunikationseinrichtung einen Zugang zu einem Kommunikationsnetzwerk über eine Mobilfunkverbindung und eine Festnetzverbindung bereitzustellen, wobei die Zugangssteuerungsentität folgendes umfasst: eine erste Schnittstelle zu der hybriden Netzwerkzugangsentität, welche ausgebildet ist, eine Zugangsinformation zu empfangen, welche einen von der hybriden Netzwerkzugangsentität verwendeten mobilen Zugangspunkt, insbesondere eine Basisstation, zu dem Kommunikationsnetzwerk anzeigt; eine zweite Schnittstelle zu einer Funkzelle, welche ausgebildet ist, von der Funkzelle eine Überlastinformation zu empfangen, welche eine Überlastung der Funkzelle anzeigt; einen Controller, der ausgebildet ist, basierend auf dem Empfang der Überlastinformation die hybride Netzwerkzugangsentität aufzufordern, eine Datenlast in Richtung der Funkzelle zu reduzieren, wenn die Funkzelle mit dem von der hybriden Netzwerkzugangsentität verwendeten mobilen Zugangspunkt zu dem Kommunikationsnetzwerk übereinstimmt.

Mit einer solchen Zugangssteuerungsentität kann eine intelligente Nutzung der zur Verfügung stehenden Bandbreite für die hybride Netzwerkzugangsentität, z.B. das Home Gateway, bereitgestellt werden, insbesondere für Szenarien in denen sowohl der Mobilfunknutzer als auch der Hybrid-Nutzer um die Ressourcen der Funkschnittstelle konkurrieren. In Fällen von Ressourcenknappheit werden mobile Nutzer weiter mit Funkressourcen versorgt, da Nutzern, die hybride Technologien nutzen, die Bandbreite reduziert wird, was explizit dem Home Gateway mitgeteilt wird. Somit kann eine Bündelung von unterschiedlichen Zugangsnetzen flächendeckend bereitgestellt werden.

Gemäß einer Ausführungsform der Zugangssteuerungsentität zeigt die Zugangsinformation zumindest einen alternativen Zugangspunkt zu dem von der hybriden Netzwerkzugangsentität verwendeten Zugangspunkt zu dem Kommunikationsnetzwerk an, insbesondere eine andere Basisstation oder einen WLAN Access Point.

Dies bietet den Vorteil, dass die hybriden Nutzer die Möglichkeit haben, auf einen anderen Zugangspunkt zum Kommunikationsnetz auszuweichen, um damit den mobilen Nutzern, die keine solche Ausweichmöglichkeit haben, eine weitere Kommunikation zu ermöglichen.

Gemäß einer Ausführungsform der Zugangssteuerungsentität ist der Controller ausgebildet, basierend auf dem Empfang der Überlastinformation die hybride Netzwerkzugangsentität aufzufordern, die Datenlast über einen ersten alternativen Zugangspunkt der alternativen Zugangspunkte zu dem Kommunikationsnetzwerk zu führen.

Dies bietet den Vorteil, dass sich damit die Lastsituation der Funkzelle effizient reduzieren lässt, so dass sie sehr schnell aus der Überlast herauskommt.

Gemäß einer Ausführungsform der Zugangssteuerungsentität ist der Controller ausgebildet, den ersten alternativen Zugangspunkt basierend auf einer Priorisierung der alternativen Zugangspunkte auszuwählen.

Dies bietet den Vorteil, dass sich damit eine effiziente Lastverteilung auf die Zugangspunkte bewirken lässt, beispielsweise wenn die Last mit Priorität auf die Zugangspunkte verteilt wird, denen noch ausreichend freie Ressourcen zur Verfügung stehen.

Gemäß einer Ausführungsform der Zugangssteuerungsentität umfasst die Zugangsinformation ferner eine Information über eine Qualität von Funksignalen der alternativen Zugangspunkte; und der Controller ist ausgebildet, den ersten alternativen Zugangspunkt basierend auf den jeweiligen Qualitäten der Funksignale der alternativen Zugangspunkte auszuwählen.

Dies bietet den Vorteil, dass anhand der Qualität der Funksignale Rückschlüsse auf die freien Ressourcen der Funkzellen geschlossen werden kann. So ist beispielsweise bei einer hohen Qualität mit einer großen Anzahl freier Ressourcen zu rechnen und umgekehrt.

Gemäß einer Ausführungsform der Zugangssteuerungsentität bezeichnen die alternativen Zugangspunkte andere Funkzellen oder Zugangspunkte mit einer anderen Funkzugangstechnologie als den von der hybriden Netzwerkzugangsentität verwendeten mobilen Zugangspunkt.

Dies bietet den Vorteil, dass auf eine Vielzahl verschiedener alternativer Zugangstechnologien, z.B. Mobilfunk, insbesondere LTE, UMTS, GSM etc. oder Festnetz, insbesondere xDSL, POTS, ISDN, ATM, etc. ausgewichen werden kann, um die Überlastsituation schnellstmöglich abzubauen.

Gemäß einer Ausführungsform der Zugangssteuerungsentität umfasst die Zugangsinformation eine Feldstärke, eine Leistung und/oder eine Zellenidentifikation der Zugangspunkte.

Dies bietet den Vorteil, dass anhand der Feldstärke und/oder der Leistung eine Qualität des Zugangspunkts bestimmt werden kann, d.h. befindet sich der Zugangspunkt in der Nähe oder ist er weit entfernt. Die Qualität gibt auch an, welche Last auf den entsprechenden Zugangspunkt abgeladen bzw. umverteilt werden kann. Anhand der Zellenidentifikation lässt sich der Zugangspunkt identifizieren und beispielsweise prüfen, ob es sich um den gleichen Zugangspunkt handelt, von dem aus die Überlast-Nachricht stammt.

Gemäß einer Ausführungsform der Zugangssteuerungsentität ist die zweite Schnittstelle ausgebildet, die Überlastinformation zu empfangen, wenn eine Auslastung der Funkzelle einen einstellbaren Schwellwert überschreitet.

Dies bietet den Vorteil, dass die Last in den Zugangspunkten zum Kommunikationsnetzwerk genau eingestellt werden kann, so dass jeder Zugangspunkt optimal ausgelastet ist, so dass Daten nicht verloren gehen und nochmals gesendet werden müssen.

Gemäß einer Ausführungsform der Zugangssteuerungsentität ist die zweite Schnittstelle ausgebildet, von weiteren Funkzellen eine jeweilige weitere Überlastinformation zu empfangen; und der Controller ist ausgebildet, basierend auf dem Empfang der weiteren Überlastinformationen die hybride Netzwerkzugangsentität aufzufordern, die Datenlast über einen alternativen Zugangspunkt zu dem Kommunikationsnetzwerk zu führen, der nicht mit den weiteren Funkzellen übereinstimmt.

Dies bietet den Vorteil, dass die Überlastsituation aller Zugangspunkte zum Kommunikationsnetzwerk effizient erfasst werden kann, so dass die Last auf Zugangspunkte verteilt werden kann, die noch nicht in Überlast laufen. Damit ist eine optimale Lastverteilung möglich.

Gemäß einer Ausführungsform der Zugangssteuerungsentität ist der Controller ausgebildet, nach einer Latenzzeit nach Empfang der Überlastinformation von der Funkzelle die hybride Netzwerkzugangsentität aufzufordern, zumindest einen Teil der Datenlast wieder über den von der hybriden Netzwerkzugangsentität initial verwendeten mobilen Zugangspunkt zu dem Kommunikationsnetzwerk zu führen.

Dies bietet den Vorteil, dass ein Zugangspunkt zum Netzwerk, nachdem er von Überlast befreit wurde, wieder erneut zur Verfügung steht. Durch die Latenzzeit lässt sich dies leicht realisieren, d.h. ohne großen Signalisierungsaufwand.

Gemäß der Erfindung umfasst die Zugangssteuerungsentität auch weitere erste Schnittstellen zu weiteren hybriden Netzwerkzugangsentität, welche ausgebildet sind, jeweilige Zugangsinformationen zu empfangen, welche von den weiteren hybriden Netzwerkzugangsentität verwendete mobilen Zugangspunkte zu dem Kommunikationsnetzwerk anzeigen; und der Controller ist ausgebildet, basierend auf dem Empfang der Zugangsinformation und der weiteren Zugangsinformationen zumindest eine entsprechende hybride Netzwerkentität auszuwählen und aufzufordern, eine Datenlast in Richtung der Funkzelle zu reduzieren.

Dies bietet den Vorteil, dass die Zugangssteuerungsentität ein gesamtes RAN (Radio Access Network, Funkzugangsnetz) mit einer Vielzahl von Zugangspunkten und hybriden Netzwerkzugangsentitäten von vielen Kommunikationsteilnehmern optimal steuern kann.

Gemäß einer Ausführungsform der Zugangssteuerungsentität umfassen die jeweiligen Zugangsinformationen ferner Informationen über eine Qualität von Funksignalen zu den verwendeten mobilen Zugangspunkten; und der Controller ist ausgebildet, basierend auf den jeweiligen Zugangsinformationen zu bestimmen, welche hybride Netzwerkentität von der Überlastung der Funkzelle betroffen ist.

Dies bietet den Vorteil, dass der Controller eine Korrelation anhand der Qualitäten der Funksignale ausführen kann, um hybride Netzwerkentitäten bzw. Home Gateways zu detektieren, welche in besonderer Weise zur Überlastsituation in einer oder mehreren Zugangspunkten beitragen. Der Controller kann diese Home Gateways beispielsweise gegenüber anderen besonders in der Nutzung der Funkschnittstelle einschränken, um das Funkzugangsnetz stabil zu halten.

Gemäß einem zweiten Aspekt betrifft die Erfindung ein Zugangssteuerungssystem zum Steuern des Zugangs einer Kommunikationseinrichtung zu einem Kommunikationsnetz, mit einer hybriden Netzwerkzugangsentität, insbesondere ein Home Gateway, welche ausgebildet ist, der Kommunikationseinrichtung den Zugang zu dem Kommunikationsnetzwerk über eine Mobilfunkverbindung und eine Festnetzverbindung bereitzustellen; und einer Zugangssteuerungsentität, welche ausgebildet ist, eine Zugangsinformation von der hybriden Netzwerkzugangsentität zu empfangen, welche einen von der hybriden Netzwerkzugangsentität verwendeten mobilen Zugangspunkt, insbesondere eine Basisstation, zu dem Kommunikationsnetzwerk anzeigt und eine Überlastinformation von einer Funkzelle zu empfangen, welche eine Überlastung der Funkzelle anzeigt, wobei die Zugangssteuerungsentität ausgebildet ist, basierend auf dem Empfang der Überlastinformation die hybride Netzwerkzugangsentität aufzufordern, eine Datenlast in Richtung der Funkzelle zu reduzieren, wenn die Funkzelle mit dem von der hybriden Netzwerkzugangsentität verwendeten mobilen Zugangspunkt zu dem Kommunikationsnetzwerk übereinstimmt.

Mit einem solchen Zugangssteuerungssystem kann eine intelligente Nutzung der zur Verfügung stehenden Bandbreite für das Home Gateway und andere mobile Nutzer, welche um Bandbreite konkurrieren, bewirkt werden. In Fällen von Ressourcenknappheit werden die mobilen Nutzer weiter mit Funkressourcen versorgt, da Nutzern, die hybride Technologien nutzen, die Bandbreite reduziert wird, was explizit dem Home Gateway mitgeteilt wird. Somit kann eine Bündelung von unterschiedlichen Zugangsnetzen effizient und flächendeckend bereitgestellt werden.

Gemäß der Erfindung umfasst das Zugangssteuerungssystem auch weitere hybride Netzwerkzugangsentitäten, welche ausgebildet sind, der Zugangssteuerungsentität jeweilige weitere Zugangsinformationen zu übermitteln, welche von den weiteren hybriden Netzwerkzugangsentitäten verwendete mobile Zugangspunkte zu dem Kommunikationsnetzwerk anzeigen; und die Zugangssteuerungsentität ist ausgebildet, basierend auf dem Empfang der Zugangsinformation und der weiteren Zugangsinformationen zumindest eine entsprechende hybride Netzwerkentität auszuwählen und aufzufordern, eine Datenlast in Richtung der Funkzelle zu reduzieren.

Dies bietet den Vorteil, dass die Zugangssteuerungsentität ein gesamtes RAN (Radio Access Network, Funkzugangsnetz) mit einer Vielzahl von Zugangspunkten und hybriden Netzwerkzugangsentitäten von vielen Kommunikationsteilnehmern optimal steuern kann.

Gemäß einem dritten Aspekt betrifft die Erfindung ein Verfahren zur Steuerung einer hybriden Netzwerkzugangsentität gemäß dem Anspruch 13.

Mit einem solchen Verfahren kann eine intelligente Nutzung der zur Verfügung stehenden Bandbreite für das Home Gateway und andere mobile Nutzer, welche um Bandbreite konkurrieren, bewirkt werden. In Fällen von Ressourcenknappheit werden die mobilen Nutzer weiter mit Funkressourcen versorgt, da Nutzern, die hybride Technologien nutzen, die Bandbreite reduziert wird, was explizit dem Home Gateway mitgeteilt wird. Somit kann eine Bündelung von unterschiedlichen Zugangsnetzen effizient und flächendeckend bereitgestellt werden.

Weitere Ausführungsbeispiele werden Bezug nehmend auf die beiliegenden Zeichnungen erläutert. Es zeigen:
Fig. 1 eine schematische Darstellung der prinzipiellen Funktionsweise eines Zugangssteuerungssystems 100 mit Netzzugang über ein Home Gateway 110 gemäß einer beispielhaften Ausführungsform;
Fig. 2 eine schematische Darstellung eines Zugangssteuerungssystems 200 mit Netzzugang über eine hybride Netzwerkzugangsentität 210 gemäß einer beispielhaften Ausführungsform; und
Fig. 3 eine schematische Darstellung eines Verfahrens 300 zur Steuerung einer hybriden Netzwerkzugangsentität gemäß einer beispielhaften Ausführungsform.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von der vorliegenden Erfindung abzuweichen.

Wenngleich ein bestimmtes Merkmal oder ein bestimmter Aspekt einer Ausführungsform bezüglich nur einer von mehreren Implementierungen offenbart worden sein mag, kann außerdem ein derartiges Merkmal oder ein derartiger Aspekt mit einem oder mehreren anderen Merkmalen oder Aspekten der anderen Implementierungen kombiniert werden, wie für eine gegebene oder bestimmte Anwendung erwünscht und vorteilhaft sein kann. Weiterhin sollen in dem Ausmaß, in dem die Ausdrücke "enthalten", "haben", "mit" oder andere Varianten davon entweder in der ausführlichen Beschreibung oder den Ansprüchen verwendet werden, solche Ausdrücke auf eine Weise ähnlich dem Ausdruck "umfassen" einschließend sein. Die Ausdrücke "gekoppelt" und "verbunden" können zusammen mit Ableitungen davon verwendet worden sein. Es versteht sich, dass derartige Ausdrücke dazu verwendet werden, um anzugeben, dass zwei Elemente unabhängig davon miteinander kooperieren oder interagieren, ob sie in direktem physischem oder elektrischem Kontakt stehen oder nicht in direktem Kontakt miteinander stehen. Außerdem ist der Ausdruck "beispielhaft" lediglich als ein Beispiel aufzufassen anstatt der Bezeichnung für das Beste oder Optimale. Die folgende Beschreibung ist deshalb nicht in einem einschränkenden Sinne zu verstehen.

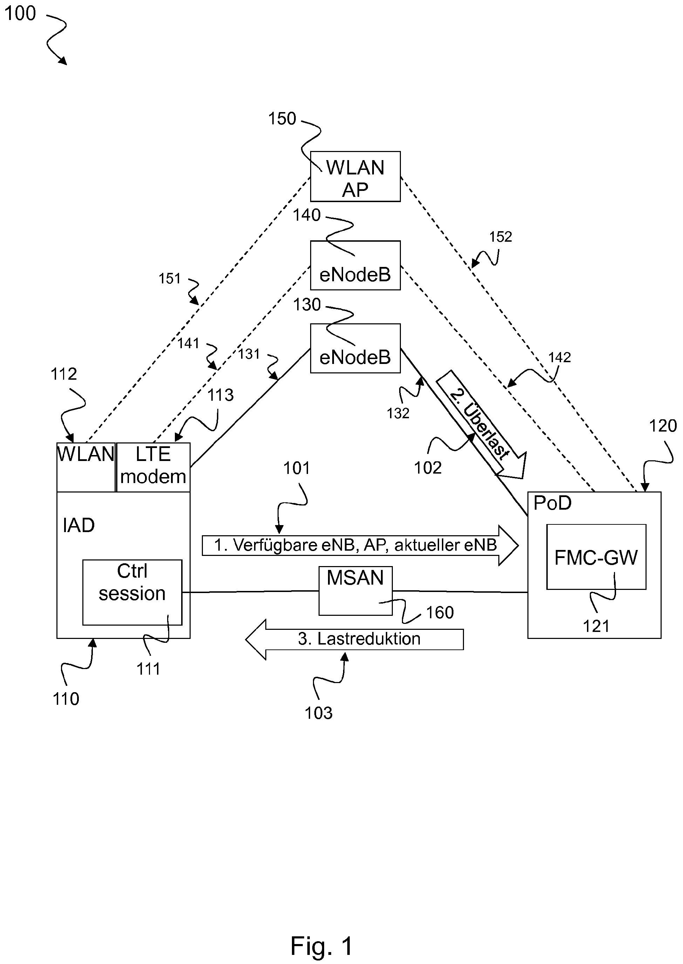

Fig. 1 zeigt eine schematische Darstellung der prinzipiellen Funktionsweise eines Zugangssteuerungssystems 100 mit Netzzugang über ein Home Gateway 110 gemäß einer beispielhaften Ausführungsform. Figur 1 stellt eine Lösung der oben genannten Aufgabe in Form einer sogenannten "Smart Hybrid Lösung" dar.

Das Zugangssteuerungssystems 100 umfasst ein Home Gateway 110 als Internet Access Device (IAD), d.h. Internet-Zugangsgerät, welches einer Kommunikationseinrichtung (nicht dargestellt) Zugang zum Kommunikationsnetz (nicht dargestellt), z.B. dem Internet, über zwei Schnittstellen bietet: eine WLAN bzw. WiFi-Schnittstelle 112 zu einem WLAN Access Point (AP) 150 bzw. WiFi-Zugangspunkt oder WiFi HotSpot in das Festnetz; und eine LTE Modem Schnittstelle 113 zu einem oder mehreren eNodeBs bzw. Basisstationen in das Mobilfunknetz. In Figur 1 sind zwar der Einfachheit halber nur zwei eNodeBs 130, 140 dargestellt, es kann sich hier jedoch um eine beliebige Zahl von eNodeBs handeln. Die Verbindung 131 von LTE Modem 113 zum (ersten) eNodeB 130 ist als feste Linie dargestellt, was bedeutet, dass diese Verbindung gerade aktiv ist bzw. vom Home Gateway 110 genutzt wird. Weitere Verbindungen 141, 151 zwischen Home Gateway 110 und (zweitem) eNodeB 140 bzw. Home Gateway 110 und WLAN AP 150 sind gestrichelt gezeichnet, was bedeutet, dass diese Verbindungen gerade nicht genutzt werden, jedoch zur Verbindungsaufnahme zur Verfügung stehen.

Das Zugangssteuerungssystems 100 umfasst ferner eine PoD ("Point of Delivery)-Netzwerkentität 120, d.h. ein Modul von Netzwerk-, Computer-, Speicher- und Anwendungskomponenten, welche zusammenarbeiten, um spezifische Netzwerkdienste bereitzustellen. Die PoD Netzwerkentität 120 stellt einen Zugangssteuerungsknoten 120 des Kommunikationssystems bzw. eine Zugangssteuerungsentität 120 dar und umfasst eine FMC (Fixed-Mobile Convergence)-GW (Gateway) Funktion 123, welche für die Steuerung der Festnetz/Mobilfunk-Komponenten des Kommunikationsnetzes zuständig ist. Neben der FMC-GW Funktion 123 kann die PoD Netzwerkentität 120 auch noch für die Bereitstellung weiterer Netzwerkdienste zuständig sein.

Die PoD Netzwerkentität 120 hat Verbindungen 152, 142, 132 zu dem WLAN Access Point (AP) 150 sowie zu den eNodeBs 130, 140. Die Verbindung 132 von PoD Netzwerkentität 120 und (erstem) eNodeB 130 ist als feste Linie dargestellt, was bedeutet, dass diese Verbindung gerade aktiv ist bzw. von der PoD Netzwerkentität 120 genutzt wird. Weitere Verbindungen 142, 152 zwischen PoD Netzwerkentität 120 und (zweitem) eNodeB 140 bzw. WLAN AP 150 sind gestrichelt gezeichnet, was bedeutet, dass diese Verbindungen gerade nicht genutzt werden, jedoch zur Verbindungsaufnahme zur Verfügung stehen. Die Verbindungen 152, 142, 132 sind üblicherweise Transportnetzschnittstellen, welche die Basisstationen bzw. APs mit weiteren Netzknoten verbinden.

Im Home Gateway 110 läuft auf einem Controller eine Control-Session 111 bzw. Steuerungssitzung 111, welche die Control plane bzw. Steuerungsschicht zur PoD-Netzwerkentität 120 darstellt. Das Home Gateway 110 ist gemäß Figur 1 über einen optionalen MSAN ("Multi-Service Access Node", Mehrfachdienste-Zugangsknoten) Netzwerkknoten 160 mit der PoD Netzwerkentität 120 verbunden, dieser MSAN Netzwerkknoten ist jedoch optional und nicht unbedingt erforderlich. Die Verbindung kann auch direkt realisiert werden oder unter Nutzung anderer Netzwerkknoten, z.B. unter Nutzung der Zugangstechnologien xDSL, POTS, ISDN, Kabel bzw. cable wie oben beschrieben. Alternativ kann statt des MSAN ein Access Node (AN), d.h. Zugangsknoten realisiert sein, der einen MSAN im ISDN/DSL/POTS Umfeld oder einen Fiber Node (Glasfaser-Knoten) im Docsis Umfeld umfassen kann.

Ein MSAN-Netzwerkknoten 160 ist ein Gerät, das üblicherweise in einem Telefonverkehrsknotenpunkt in einem Schrank installiert ist und die Telefon- bzw. Datenleitungen von Kunden mit dem Kernnetzwerk verbindet, um Kommunikationsdienste wie Telefon, ISDN, Breitband wie xDSL von der gleichen Plattform aus bereitzustellen. Ein MSAN-Netzwerkknoten 160 kann aus verschiedenen Schmalbanddiensten (POTS) und Breitbanddiensten (xDSL) bestehen, Batterien mit Verstärkern, optischen Übertragungseinheiten und Kupferverteilrahmen.

Die FMC-GW ("Fixed Mobile Konvergenz Gateway") Funktion, die in dem PoD 120 realisiert sein kann, empfängt über die Control Plane Informationen zur Auslastung 102 der Funkzelle (eine sogenannte "Congestion Message" bzw. Überlastnachricht) sowie Informationen 101 vom Home Gateway 110 über erreichbare Access Technologien, z.B. über die eNodeBs 130, 140 und den WLAN AP 150, und die Qualität des Radiosignals, das empfangen wird, z.B. des Radiosignals auf der Luftschnittstelle 131 zwischen Home-Gateway 110 und eNodeB 130, welche gerade aktiv ist. Damit ist eine Korrelation zwischen knappen Ressourcen einer Zelle und betroffenen Hybrid-Kunden möglich.

Im konkreten Fall sendet das Home Gateway (IAD) 110 folgende Informationen 101 über die Control Plane, d.h. mittels der Control Session 111 zu einer Hybrid- oder FMC Kontrollfunktion 121:
- verfügbare eNodeB 130, 140 und/oder WLAN Access Points 150 (mit Feldstärke, Power Level und Cell-ID, d.h. Identifikation des jeweiligen eNodeBs);
- eNodeB 130 (mit Cell-ID), mit dem das Home Gateway aktuell verbunden ist (Korrelation).

Der eNodeB, z.B. der erste eNodeB 130 in der Darstellung der Figur 1, sendet im Fall von Blockierungen bzw. knappen Ressourcen in der Zelle 130 eine "Congestion" Nachricht bzw. Überlast-Nachricht 102 an den FMC-GW 121. Das Senden der "Congestion" Nachricht 102 kann durch Erreichen eines wählbaren Schwellwerts eingestellt werden. Die Einstellung kann entweder auf Seiten des eNodeB 130 oder auf Seiten des FMC-GW 121 erfolgen oder auf beiden Seiten.

Durch die Zuordnung von eNodeB 130 und knappen Ressourcen auf der Radioseite kann das Home Gateway 110 explizit über den Kontrollkanal 103 zum Reduzieren der Last auf dem Radiolink 131 aufgefordert werden. Dies kann somit eine Blockierung der Radiozelle 130 proaktiv verhindern. Weiterhin ist das Triggern eines Handovers zu einem alternativen eNodeB, z.B. eNodeB 140 oder einem erreichbaren WLAN Zugangspunkt 150, z.B. einem öffentlichen WiFi-Hotspot möglich. Auch dies kann das Blockieren des Radiolinks 131 verhindern.

Das FMC-GW 121 erhält somit Informationen aller relevanten bzw. alternativen Zugangstechnologien und kann damit eine Priorisierung des Access-Links 131, 141, 151 vornehmen.

Der Einfachheit halber ist in Figur 1 nur ein einziges IAD 110 bzw. Home Gateway 110 dargestellt. Der FMC-GW 121 im PoD 120 kann jedoch eine Vielzahl verschiedener Home-Gateways 110 steuern und aus den gelieferten Informationen 101 eine Korrelation vornehmen, um beispielsweise das Home-Gateway 110 zu bestimmen, welches hauptsächlich für die Überlastsituation im eNodeB 130 verantwortlich ist, z.B. anhand von Informationen über die Qualität der Radiosignale auf den jeweiligen Schnittstellen zwischen den Home-Gateways 110 und dem eNodeB 130.

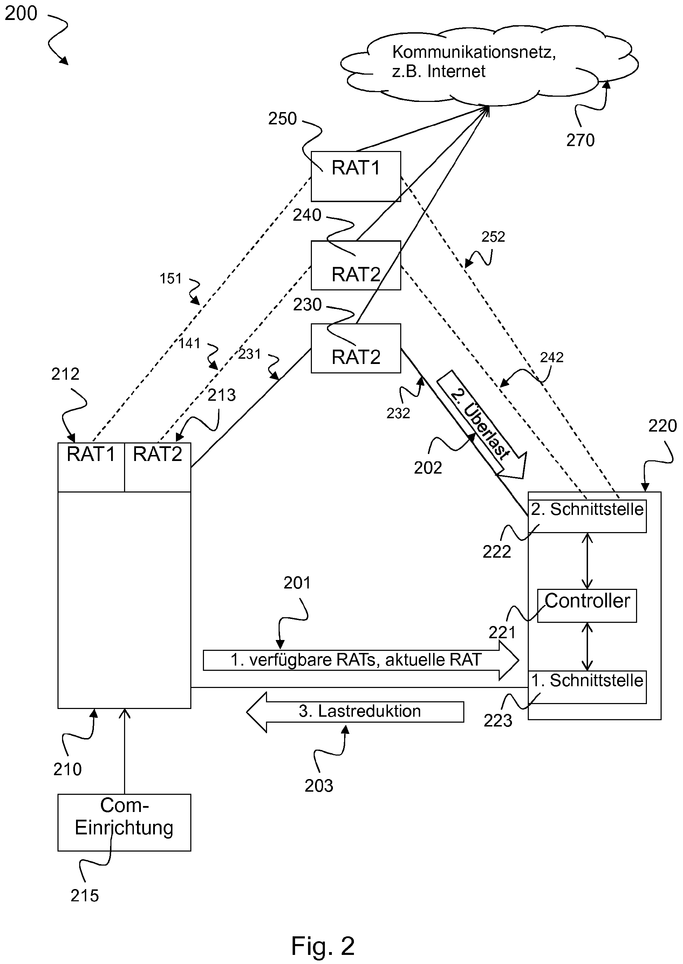

Fig. 2 zeigt eine schematische Darstellung eines Zugangssteuerungssystems 200 mit Netzzugang über eine hybride Netzwerkzugangsentität 210 gemäß einer beispielhaften Ausführungsform. Figur 2 stellt eine allgemeinere Lösung der oben genannten Aufgabe dar in Form eines sogenannten hybriden Zugangssteuerungssystems.

Das Zugangssteuerungssystem 200 umfasst eine hybride Netzwerkzugangsentität 210, welche z.B. dem Home Gateway 110 aus Figur 1 entsprechen kann. Das Zugangssteuerungssystem 200 umfasst ferner eine Zugangsteuerungsentität 220, welche beispielsweise der PoD Netzwerkentität 120 aus Figur 1 entsprechen kann. Ferner kann das Zugangssteuerungssystem 200 mehrere Netzzugangspunkte 230, 240, 250 verschiedener Radio-Access Technologien (RAT) umfassen, beispielsweise einer zellularen Funkzugangstechnologie RAT2, z.B. LTE, entsprechend den eNodeBs 130, 140 aus Figur 1 oder einer Festnetzzugangstechnologie RAT1, z.B. xDSL, mit Zuführung über einen WLAN AP 150 entsprechend Figur 1.

Die hybride Netzwerkzugangsentität 210, beispielsweise als Home Gateway 110 entsprechend Figur 1 realisiert, ist ausgebildet, einer Kommunikationseinrichtung 215 den Zugang zu dem Kommunikationsnetzwerk 270 über eine Mobilfunkverbindung 213 und eine Festnetzverbindung 212 bzw. allgemein über eine Mehrzahl von Funkzugangstechnologien RAT1, RAT2, bereitzustellen. Wenngleich in Figur 2 nur zwei RATs 212, 213 dargestellt sind, kann die hybride Netzwerkzugangsentität 210 eine Vielzahl verschiedener Schnittstellen zu verschiedenen Netzzugangspunkten über verschiedene RATs umfassen.

Die Zugangssteuerungsentität 220 ist ausgebildet, eine Zugangsinformation 201 von der hybriden Netzwerkzugangsentität 210 zu empfangen, welche einen von der hybriden Netzwerkzugangsentität 210 verwendeten mobilen Zugangspunkt 230, z.B. eine Basisstation oder eNodeB 130 wie in Figur 1 dargestellt, zu dem Kommunikationsnetzwerk 270 anzeigt. Die Zugangssteuerungsentität 220 ist ferner ausgebildet, eine Überlastinformation 202 von einer Funkzelle 230 zu empfangen, welche eine Überlastung der Funkzelle 230 anzeigt. Die Funkzelle 230, von der die Überlastinformation 202 kommt, kann eine beliebige eNodeB sein, mit der die hybride Netzwerkzugangsentität 210 verbunden ist, sie kann eine gerade aktive Funkzelle 230 sein, über welche die hybride Netzwerkzugangsentität 210 den Datenverkehr von der Kommunikationseinrichtung ins Kommunikationsnetz 270 leitet oder aber eine mögliche eNodeB, mit der die hybride Netzwerkzugangsentität 210 sich verbinden kann.

Die Zugangssteuerungsentität 220 ist ausgebildet, basierend auf dem Empfang der Überlastinformation 202 die hybride Netzwerkzugangsentität 210 aufzufordern, eine Datenlast in Richtung der Funkzelle 230 zu reduzieren, wenn die Funkzelle 230 mit dem von der hybriden Netzwerkzugangsentität 210 verwendeten mobilen Zugangspunkt 230 zu dem Kommunikationsnetzwerk 270 übereinstimmt. Für diese Überprüfung kann die Zugangssteuerungsentität 220 die von der hybriden Netzwerkzugangsentität 210 gelieferte Information 201 nutzen, welche eine Identifikation des aktuellen Zugangspunktes ins Kommunikationsnetz 270 anzeigt, d.h. z.B. eine Cell-ID des entsprechenden eNodeB.

Das Zugangssteuerungssystem 200 kann ferner weitere hybride Netzwerkzugangsentitäten (nicht dargestellt) umfassen, welche ausgebildet sind, der Zugangssteuerungsentität 210 jeweilige weitere Zugangsinformationen zu übermitteln, welche von den weiteren hybriden Netzwerkzugangsentitäten verwendete mobile Zugangspunkte 230, 240, 250 zu dem Kommunikationsnetzwerk 270 anzeigen. Die Zugangssteuerungsentität 220 kann basierend auf dem Empfang der Zugangsinformation und der weiteren Zugangsinformationen eine oder mehrere entsprechende hybride Netzwerkentitäten auswählen und auffordern, ihre Datenlast in Richtung der Funkzelle 230 zu reduzieren 203.

Im Folgenden wird der Aufbau einer beispielhaften Zugangssteuerungsentität 220 näher beschrieben. Die Zugangssteuerungsentität 220, welche beispielsweise der PoD Netzwerkentität 120 aus Figur 1 entsprechen kann, umfasst einen Controller 221 und zwei Schnittstellen 222, 223, welche mit dem Controller interagieren.

Die Zugangssteuerungsentität 220 dient der Steuerung einer hybriden Netzwerkzugangsentität 210, z.B. eines Home Gateways 110, wie in Figur 1 beschrieben, und ist ausgebildet, einer Kommunikationseinrichtung 215 den Zugang zu einem Kommunikationsnetzwerk 270 über eine Mobilfunkverbindung 213 und eine Festnetzverbindung 212 bzw. allgemein über eine Mehrzahl von Funkzugangstechnologien RAT1, RAT2, bereitzustellen.

Die erste Schnittstelle 223 zu der hybriden Netzwerkzugangsentität 210 ist ausgebildet, eine Zugangsinformation 201 zu empfangen, welche einen von der hybriden Netzwerkzugangsentität 210 verwendeten mobilen Zugangspunkt 230 zu dem Kommunikationsnetzwerk 270, insbesondere eine Basisstation 130, z.B. eine eNodeB wie in Figur 1 beschrieben, anzeigt.

Die zweite Schnittstelle 222 zu einer Funkzelle 230 ist ausgebildet, von der Funkzelle 230 eine Überlastinformation 202 zu empfangen, welche eine Überlastung der Funkzelle 230 anzeigt. Wie bereits gesagt, kann die Funkzelle 230 von der die Überlastinformation 202 stammt, eine beliebige eNodeB sein, mit der die hybride Netzwerkzugangsentität 210 verbunden ist, sie kann eine gerade aktive Funkzelle 230, sein, über welche die hybride Netzwerkzugangsentität 210 den Datenverkehr von der Kommunikationseinrichtung ins Kommunikationsnetz 270 leitet oder aber eine mögliche eNodeB, mit der die hybride Netzwerkzugangsentität 210 sich verbinden kann.

Der Controller 221, der beispielsweise der FMC-GW Funktion 121 aus Figur 1 entsprechen kann, ist ausgebildet, basierend auf dem Empfang der Überlastinformation 202 die hybride Netzwerkzugangsentität 210 aufzufordern, eine Datenlast in Richtung der Funkzelle 230 zu reduzieren 203, wenn die Funkzelle 230 mit dem von der hybriden Netzwerkzugangsentität 210 verwendeten mobilen Zugangspunkt 230 zu dem Kommunikationsnetzwerk übereinstimmt. Für diese Überprüfung kann der Controller 221 die von der hybriden Netzwerkzugangsentität 210 gelieferte Information 201 nutzen, welche eine Identifikation des aktuellen Zugangspunktes ins Kommunikationsnetz 270 anzeigt, d.h. z.B. eine Cell-ID des entsprechenden eNodeB.

Die Zugangsinformation 201 kann einen oder mehrere alternative Zugangspunkte 240, 250, zu dem von der hybriden Netzwerkzugangsentität 210 verwendeten Zugangspunkt 230 zu dem Kommunikationsnetzwerk anzeigen, z.B. eine andere Basisstation 140 oder einen WLAN Access Point 150, wie in Figur 1 dargestellt.

Der Controller 221 kann basierend auf dem Empfang der Überlastinformation 202 die hybride Netzwerkzugangsentität 210 auffordern, die Datenlast über einen ersten alternativen Zugangspunkt, z.B. RAT2 240 oder RAT1 250 zu dem Kommunikationsnetzwerk 270 führen.

Der Controller 221 kann den ersten alternativen Zugangspunkt 240 beispielsweise basierend auf einer Priorisierung der alternativen Zugangspunkte 240, 250 auswählen. Die Priorisierung kann z.B. lastbasiert erfolgen, so dass solche Zugangspunkte ausgewählt werden, die noch genügend freie Kapazität zur Verfügung haben.

Die Zugangsinformation 201 kann ferner eine Information über eine Qualität von Funksignalen der alternativen Zugangspunkte 240, 250 umfassen. Der Controller 221 kann z.B. den ersten alternativen Zugangspunkt 240 basierend auf den jeweiligen Qualitäten der Funksignale der alternativen Zugangspunkte 240, 250 auswählen.

Die alternativen Zugangspunkte 240, 250 können andere Funkzellen, z.B. Funkzelle RAT2 240 oder Zugangspunkte mit einer anderen Funkzugangstechnologien, z.B. RAT1 250 Zugangspunkt bzw. WLAN AP, als den von der hybriden Netzwerkzugangsentität verwendeten mobilen Zugangspunkt 230 bezeichnen.

Die Zugangsinformation 201 kann beispielsweise eine Feldstärke, eine Leistung und/oder eine Zellenidentifikation der Zugangspunkte 230, 240, 250 angeben.

Die zweite Schnittstelle 222 kann ausgebildet sein, die Überlastinformation 202 zu empfangen, wenn eine Auslastung der Funkzelle 230 einen einstellbaren Schwellwert überschreitet. Dieser Schwellwert kann beispielsweise von dem RAT Zugangspunkt eingestellt werden, wie z.B. der Basisstation, oder aber von der Zugangssteuerungsentität 220 oder von beiden.

Die zweite Schnittstelle 222 kann ferner von weiteren Funkzellen, z.B. RAT2 240 eine jeweilige weitere Überlastinformation empfangen. Der Controller 221 kann dann basierend auf dem Empfang der weiteren Überlastinformationen die hybride Netzwerkzugangsentität 210 auffordern, die Datenlast über einen alternativen Zugangspunkt, z.B. 250 zu dem Kommunikationsnetzwerk 270 zu führen, der nicht mit den weiteren Funkzellen, d.h. denjenigen Funkzellen 240, welche Überlastinformationen liefern, übereinstimmt.

Der Controller 221 kann in einer Implementierungsvariante ausgebildet sein, nach einer Latenzzeit nach Empfang der Überlastinformation 202 von der Funkzelle 230 die hybride Netzwerkzugangsentität 210 aufzufordern, zumindest einen Teil der Datenlast wieder über den von der hybriden Netzwerkzugangsentität 210 initial verwendeten mobilen Zugangspunkt 230 zu dem Kommunikationsnetzwerk zu führen.

Die Zugangssteuerungsentität 220 kann ferner weitere erste Schnittstellen zu weiteren hybriden Netzwerkzugangsentitäten umfassen (nicht dargestellt in Fig. 2), welche ausgebildet sind, jeweilige Zugangsinformationen zu empfangen, welche von den weiteren hybriden Netzwerkzugangsentitäten verwendete mobile Zugangspunkte zu dem Kommunikationsnetzwerk anzeigen. Der Controller 221 kann dann basierend auf dem Empfang der Zugangsinformation 201 und der weiteren Zugangsinformationen zumindest eine entsprechende hybride Netzwerkentität auswählen und auffordern, eine Datenlast in Richtung der Funkzelle 230 zu reduzieren.

Die jeweiligen Zugangsinformationen können ferner Informationen über eine Qualität von Funksignalen zu den verwendeten mobilen Zugangspunkten 230, 240 umfassen. Der Controller 221 kann basierend auf den jeweiligen Zugangsinformationen bestimmen, welche hybride Netzwerkentität von der Überlastung der Funkzelle betroffen ist.

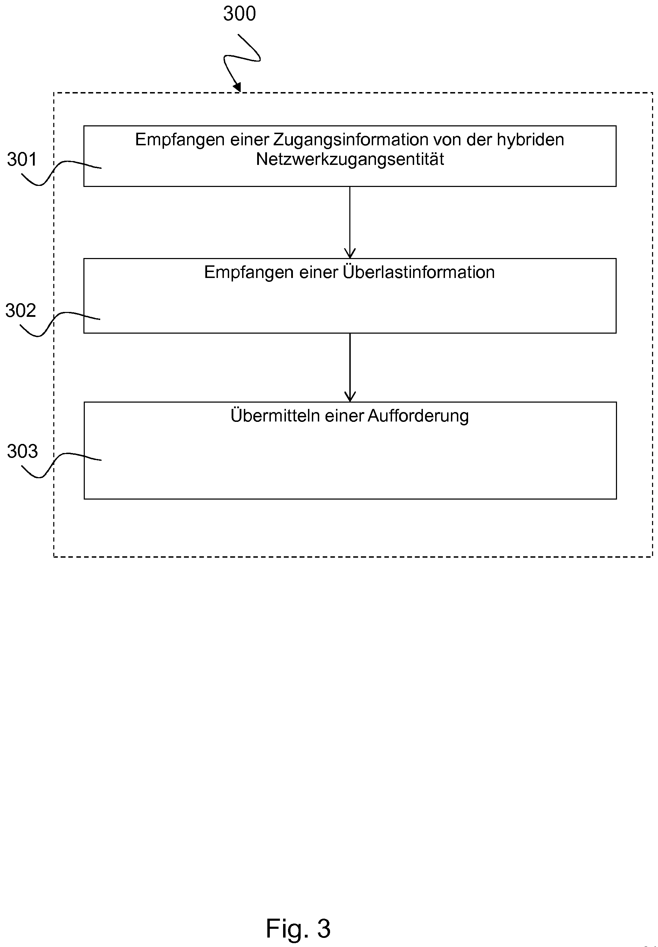

Fig. 3 zeigt eine schematische Darstellung eines Verfahrens 300 zur Steuerung einer hybriden Netzwerkzugangsentität, z.B. einer Netzwerkentität 210 wie in Figur 2 dargestellt oder eines Home Gateways 110 wie in Figur 1 dargestellt gemäß einer beispielhaften Ausführungsform. Die hybride Netzwerkzugangsentität dient dazu, einer Kommunikationseinrichtung 215 einen Zugang zu einem Kommunikationsnetzwerk 270 über eine Mobilfunkverbindung 213 und eine Festnetzverbindung 212, wie z.B. in den Figuren 1 und 2 dargestellt, bereitzustellen.

Das Verfahren 300 umfasst einen ersten Schritt 301: Empfangen einer Zugangsinformation 201 von der hybriden Netzwerkzugangsentität 210, welche einen von der hybriden Netzwerkzugangsentität verwendeten mobilen Zugangspunkt 230, wie in Figur 2 dargestellt, insbesondere eine Basisstation 130, wie in Figur 1 dargestellt, zu dem Kommunikationsnetzwerk anzeigt.

Das Verfahren 300 umfasst einen zweiten Schritt 302: Empfangen einer Überlastinformation 202 von einer Funkzelle 230, welche eine Überlastung der Funkzelle 230 anzeigt, wie z.B. in Figur 2 dargestellt.

Das Verfahren 300 umfasst einen dritten Schritt 303: Übermitteln einer Aufforderung 203 an die hybride Netzwerkzugangsentität 210 basierend auf dem Empfang 302 der Überlastinformation 202 eine Datenlast in Richtung der Funkzelle 230 zu reduzieren, wenn die Funkzelle 230 mit dem von der hybriden Netzwerkzugangsentität 210 verwendeten mobilen Zugangspunkt 230 zu dem Kommunikationsnetzwerk 270 übereinstimmt, wie z.B. in Figur 2 dargestellt. Dies kann beispielsweise durch Umschalten der Verbindung der hybriden Netzwerkzugangsentität 210 vom Zugangspunkt 230 auf einen anderen Zugangsknoten 240 erfolgen, sofern dieser die vorher genannten Auswahlkriterien (beispielsweise Feldstärke, Leistung oder Qualität) erfüllt.

Ein Aspekt der Erfindung umfasst auch ein Computerprogrammprodukt, das direkt in den internen Speicher eines digitalen Computers geladen werden kann und Softwarecodeabschnitte umfasst, mit denen die zu Figuren 1 und 2 beschriebenen Schritte bzw. das zu Figur 3 beschriebene Verfahren 300 ausgeführt werden kann, wenn das Produkt auf einem Computer läuft. Das Computerprogrammprodukt kann auf einem computergeeigneten Medium gespeichert sein und computerlesbare Programmittel umfassen, die einen Computer veranlassen, die zu Figuren 1 und 2 beschriebenen Schritte bzw. das zu Figur 3 beschriebene Verfahren 300 auszuführen.

Der Computer kann ein PC sein, beispielsweise ein PC eines Computernetzwerks. Der Computer kann als ein Chip, ein ASIC, ein Mikroprozessor oder ein Signalprozessor realisiert sein und in einem Computernetzwerk, beispielsweise als Prozessor einer Basisstation in einem gebäudeinternen Kommunikationsnetzwerk wie in den Figuren 1 bis 2 beschrieben, oder in einem gebäudeexternen Kommunikationsnetzwerk angeordnet sein.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt, müssen einzelne Elemente, die in Verbindung stehend dargestellt wurden, nicht direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale.

Die Ansprüche legen den Schutzbereich der Erfindung fest.

### Bezugszeichenliste

- 100:: Zugangssteuerungssystem
- 101:: Information mit verfügbaren Zugangspunkten und aktuellem Zugangspunkt
- 102:: Überlastinformation
- 103:: Anweisung, Last zu reduzieren
- 110:: Home Gateway, IAD
- 111:: Control Session
- 112:: WLAN Schnittstelle
- 113:: LTE Modem Schnittstelle
- 120:: Zugangssteuerungsentität, PoD Entität
- 121:: Fixed Mobile Convergence Gateway Funktion
- 130:: erster eNodeB
- 140:: zweiter eNodeB
- 150:: WLAN AP
- 131:: Radio-Schnittstelle (insbesondere LTE) zwischen Home Gateway 110 und erstem eNodeB 130
- 141:: Radio-Schnittstelle (insbesondere LTE) zwischen Home Gateway 110 u. zweitem eNodeB 140
- 151:: Radio-Schnittstelle (insbesondere WLAN) zwischen Home Gateway und WLAN AP 150
- 132:: Transportnetz-Schnittstelle zwischen FMC-GW und erstem eNodeB 130
- 142:: Transportnetz-Schnittstelle zwischen FMC-GW und zweitem eNodeB 140
- 152:: Transportnetz-Schnittstelle zwischen FMC-GW und WLAN AP 150
- 160:: MSAN

- 200:: Zugangssteuerungssystem
- 201:: Information mit verfügbaren Zugangspunkten und aktuellem Zugangspunkt
- 202:: Überlastinformation
- 123:: Anweisung, Last zu reduzieren
- 210:: hybride Zugangssteuerungsentität, Home Gateway
- 215:: Kommunikationseinrichtung
- 212:: RAT1 Schnittstelle, z.B. WLAN
- 213:: RAT2 Schnittstelle, z.B. LTE
- 220:: Zugangssteuerungsentität
- 221:: Controller
- 222:: 2. Schnittstelle
- 223:: 1. Schnittstelle
- 230:: erster RAT2 Knoten, z.B. eNodeB
- 240:: zweiter RAT2 Knoten, z.B. eNodeB
- 250:: RAT1 Knoten, z.B. WLAN AP
- 231:: Schnittstelle zwischen Home Gateway 210 und erstem RAT2 Knoten 230
- 241:: Schnittstelle zwischen Home Gateway 210 u. zweitem RAT2 240
- 251:: Schnittstelle zwischen Home Gateway 210 und RAT1 Knoten 250
- 232:: Schnittstelle zwischen Zugangssteuerungsentität und RAT2 Knoten 230
- 242:: Schnittstelle zwischen Zugangssteuerungsentität und RAT2 Knoten 240
- 252:: Schnittstelle zwischen Zugangssteuerungsentität und RAT1 Knoten 250

- 300:: Verfahren zur Steuerung einer hybriden Netzwerkzugangsentität
- 301:: 1. Schritt
- 302:: 2. Schritt
- 304:: 3. Schritt

## Patentansprüche

1. Zugangssteuerungsentität (220) zur Steuerung von hybriden Netzwerkzugangsentitäten (210),
- wobei die hybriden Netzwerkzugangsentitäten (210) ausgebildet sind, einer Kommunikationseinrichtung einen Zugang zu einem Kommunikationsnetzwerk über eine Mobilfunkverbindung und eine Festnetzverbindung bereitzustellen,
- wobei die Zugangssteuerungsentität (220) folgendes umfasst:
- eine erste Schnittstelle (223) zu einer ersten hybriden Netzwerkzugangsentität (210), wobei diese erste Schnittstelle (223) ausgebildet ist, eine Zugangsinformation (201) zu empfangen, welche einen von der ersten hybriden Netzwerkzugangsentität (210) verwendeten mobilen Zugangspunkt (230) zu dem Kommunikationsnetzwerk anzeigt;
- eine zweite Schnittstelle (222) zu einer Funkzelle (230), wobei diese zweite Schnittstelle (222) ausgebildet ist, von der Funkzelle (230) eine Überlastinformation (202) zu empfangen, welche eine Überlastung der Funkzelle (230) anzeigt;
- einen Controller (221), der ausgebildet ist, basierend auf dem Empfang der Überlastinformation (202) die erste hybride Netzwerkzugangsentität (210) aufzufordern, eine Datenlast in Richtung der Funkzelle (230) zu reduzieren (203), wenn die Funkzelle (230) mit dem von der ersten hybriden Netzwerkzugangsentität (210) verwendeten mobilen Zugangspunkt (230) zu dem Kommunikationsnetzwerk übereinstimmt;
**dadurch gekennzeichnet, dass**
die Zugangssteuerungsentität weitere erste Schnittstellen zu weiteren hybriden Netzwerkzugangsentitäten besitzt, wobei diese weiteren ersten Schnittstellen ausgebildet sind, jeweilige Zugangsinformationen zu empfangen, welche von den weiteren hybriden Netzwerkzugangsentitäten verwendete mobilen Zugangspunkte zu dem Kommunikationsnetzwerk anzeigen;
- wobei der Controller (221) ausgebildet ist, basierend auf dem Empfang der Zugangsinformation (201) und der weiteren Zugangsinformationen zumindest eine der weiteren hybriden Netzwerkentitäten auszuwählen und aufzufordern, eine Datenlast in Richtung der Funkzelle (230) zu reduzieren.

2. Zugangssteuerungsentität (220) nach Anspruch 1,
wobei die Zugangsinformation (201) zumindest einen alternativen Zugangspunkt (240, 250) zu dem von der hybriden Netzwerkzugangsentität (210) verwendeten Zugangspunkt (230) zu dem Kommunikationsnetzwerk anzeigt, insbesondere eine andere Basisstation (140) oder einen WLAN Access Point (150).

3. Zugangssteuerungsentität (220) nach Anspruch 2,
wobei der Controller (221) ausgebildet ist, basierend auf dem Empfang der Überlastinformation (202) die hybride Netzwerkzugangsentität (210) aufzufordern, die Datenlast über einen ersten alternativen Zugangspunkt (240) der alternativen Zugangspunkte (240, 250) zu dem Kommunikationsnetzwerk zu führen.

4. Zugangssteuerungsentität (220) nach Anspruch 3,
wobei der Controller (221) ausgebildet ist, den ersten alternativen Zugangspunkt (240) basierend auf einer Priorisierung der alternativen Zugangspunkte (240, 250) auszuwählen.

5. Zugangssteuerungsentität (220) nach Anspruch 3 oder 4,
wobei die Zugangsinformation (201) ferner eine Information über eine Qualität von Funksignalen der alternativen Zugangspunkte (240, 250) umfasst; und
wobei der Controller (221) ausgebildet ist, den ersten alternativen Zugangspunkt (240) basierend auf den jeweiligen Qualitäten der Funksignale der alternativen Zugangspunkte (240, 250) auszuwählen.

6. Zugangssteuerungsentität (220) nach einem der Ansprüche 2 bis 5,
wobei die alternativen Zugangspunkte (240, 250) andere Funkzellen (140) oder Zugangspunkte mit einer anderen Funkzugangstechnologie (150) als den von der hybriden Netzwerkzugangsentität verwendeten mobilen Zugangspunkt (230) bezeichnen.

7. Zugangssteuerungsentität (220) nach einem der vorstehenden Ansprüche,
wobei die Zugangsinformation (201) eine Feldstärke, eine Leistung und/oder eine Zellenidentifikation der Zugangspunkte (230, 240, 250) umfasst.

8. Zugangssteuerungsentität (220) nach einem der vorstehenden Ansprüche,
wobei die zweite Schnittstelle (222) ausgebildet ist, die Überlastinformation (202) zu empfangen, wenn eine Auslastung der Funkzelle (230) einen einstellbaren Schwellwert überschreitet.

9. Zugangssteuerungsentität (220) nach einem der vorstehenden Ansprüche,
wobei die zweite Schnittstelle (222) ausgebildet ist, von weiteren Funkzellen (240) eine jeweilige weitere Überlastinformation zu empfangen;
und wobei der Controller (221) ausgebildet ist, basierend auf dem Empfang der weiteren Überlastinformationen die hybride Netzwerkzugangsentität (210) aufzufordern, die Datenlast über einen alternativen Zugangspunkt (250) zu dem Kommunikationsnetzwerk zu führen, der nicht mit den weiteren Funkzellen (240) übereinstimmt.

10. Zugangssteuerungsentität (220) nach einem der vorstehenden Ansprüche,
wobei der Controller (221) ausgebildet ist, nach einer Latenzzeit nach Empfang der Überlastinformation (202) von der Funkzelle (230) die hybride Netzwerkzugangsentität (210) aufzufordern, zumindest einen Teil der Datenlast wieder über den von der hybriden Netzwerkzugangsentität (210) initial verwendeten mobilen Zugangspunkt (230) zu dem Kommunikationsnetzwerk zu führen.

11. Zugangssteuerungsentität (220) nach einem der vorstehenden Ansprüche,
wobei die jeweiligen Zugangsinformationen ferner Informationen über eine Qualität von Funksignalen zu den verwendeten mobilen Zugangspunkten (230, 240) umfassen; und
wobei der Controller (221) ausgebildet ist, basierend auf den jeweiligen Zugangsinformationen zu bestimmen, welche hybride Netzwerkentität von der Überlastung der Funkzelle betroffen ist.

12. Zugangssteuerungssystem (200) zum Steuern des Zugangs einer Kommunikationseinrichtung zu einem Kommunikationsnetz, mit:
einer hybriden Netzwerkzugangsentität (210), insbesondere ein Home Gateway (110), welche ausgebildet ist, der Kommunikationseinrichtung den Zugang zu dem Kommunikationsnetzwerk über eine Mobilfunkverbindung und eine Festnetzverbindung bereitzustellen;
einer Zugangssteuerungsentität (220), welche ausgebildet ist, eine Zugangsinformation (201) von der hybriden Netzwerkzugangsentität (210) zu empfangen, welche einen von der hybriden Netzwerkzugangsentität (210) verwendeten mobilen Zugangspunkt (230), insbesondere eine Basisstation (130), zu dem Kommunikationsnetzwerk anzeigt und eine Überlastinformation (202) von einer Funkzelle (230) zu empfangen, welche eine Überlastung der Funkzelle (230) anzeigt,
wobei die Zugangssteuerungsentität (220) ausgebildet ist, basierend auf dem Empfang der Überlastinformation (202) die hybride Netzwerkzugangsentität (210) aufzufordern, eine Datenlast in Richtung der Funkzelle (230) zu reduzieren, wenn die Funkzelle (230) mit dem von der hybriden Netzwerkzugangsentität (210) verwendeten mobilen Zugangspunkt (230) zu dem Kommunikationsnetzwerk übereinstimmt; und
**dadurch gekennzeichnet, dass**
das Zugangssteuerungssystem weitere hybride Netzwerkzugangsentitäten aufweist, welche ausgebildet sind, der Zugangssteuerungsentität (210) jeweilige weitere Zugangsinformationen zu übermitteln, welche von den weiteren hybriden Netzwerkzugangsentitäten verwendete mobile Zugangspunkte (240) zu dem Kommunikationsnetzwerk anzeigen;
wobei die Zugangssteuerungsentität (220) ausgebildet ist, basierend auf dem Empfang der Zugangsinformation und der weiteren Zugangsinformationen zumindest eine entsprechende hybride Netzwerkentität auszuwählen und aufzufordern, eine Datenlast in Richtung der Funkzelle zu reduzieren (203).

13. Verfahren (300) zur Steuerung einer hybriden Netzwerkzugangsentität (210), insbesondere eines Home Gateways (110), welche ausgebildet ist, einer Kommunikationseinrichtung einen Zugang zu einem Kommunikationsnetzwerk über eine Mobilfunkverbindung und eine Festnetzverbindung bereitzustellen, wobei das Verfahren (300) folgendes umfasst:
Empfangen (301) einer Zugangsinformation (201) von der hybriden Netzwerkzugangsentität (210), welche einen von der hybriden Netzwerkzugangsentität verwendeten mobilen Zugangspunkt (230), insbesondere eine Basisstation (130), zu dem Kommunikationsnetzwerk anzeigt;
Empfangen (302) einer Überlastinformation (202) von einer Funkzelle (230), welche eine Überlastung der Funkzelle (230) anzeigt;
Übermitteln (303) einer Aufforderung (203) an die hybride Netzwerkzugangsentität (210) basierend auf dem Empfang (302) der Überlastinformation (202), eine Datenlast in Richtung der Funkzelle (230) zu reduzieren, wenn die Funkzelle (230) mit dem von der hybriden Netzwerkzugangsentität (210) verwendeten mobilen Zugangspunkt (230) zu dem Kommunikationsnetzwerk übereinstimmt;
**dadurch gekennzeichnet dass** das Verfahren die folgenden Schritte aufweist:
Empfangen von jeweiligen Zugangsinformationen von weiteren hybriden Netzwerkzugangsentitäten, welche von den weiteren hybriden Netzwerkzugangsentitäten verwendete mobile Zugangspunkte zu dem Kommunikationsnetzwerk anzeigen;
Auswählen zumindest einer entsprechenden hybriden Netzwerkentität basierend auf dem Empfang der Zugangsinformation (201) und der weiteren Zugangsinformationen; und Auffordern der ausgewählten zumindest einen hybriden Netzwerkentität, eine Datenlast in Richtung der Funkzelle (230) zu reduzieren.

## Claims

1. An access control entity (220) for controlling hybrid network access entities (210),
- wherein the hybrid network access entities (210) are configured for providing a communication device with an access to a communication network via a mobile phone connection and a fixed-line connection,
- wherein the access control entity (220) comprises the following:
- a first interface (223) with a first hybrid network access entity (210), wherein this first interface (223) is configured for receiving access information (201) indicating a mobile access point (230) to the communication network used by the first hybrid network access entity (210);
- a second interface (222) with a radio cell (230), wherein this second interface (222) is configured for receiving, from the radio cell (230), overload information (202) indicating an overload of the radio cell (230);
- a controller (221), which is configured for prompting the first hybrid network access entity (210), based on reception of the overload information (202), to reduce a data load in the direction of the radio cell (203) if the radio cell (230) coincides with the mobile access point (230) to the communication network used by the first hybrid network access entity (210);
**characterized in that**
the access control entity possesses further first interfaces with further hybrid network access entities, wherein these further first interfaces are configured for receiving respective items of access information indicating mobile access points, to the communication network, used by the further hybrid network access entities;
- wherein the controller (221) is configured for selecting and prompting at least one of the further hybrid network entities, based on reception of the access information (201) and of the further access information, to reduce a data load in the direction of the radio cell (230).

2. The access control entity (220) according to Claim 1,
wherein the access information (201) indicates at least one alternative access point (240, 250) to the access point (230) to the communication network used by the hybrid network access entity (210), in particular another base station (140) or a WLAN access point (150).

3. The access control entity (220) according to Claim 2,
wherein the controller (221) is configured for prompting the hybrid network access entity (210), based on reception of the overload information (202), to route the data load to the communication network via a first alternative access point (240) of the alternative access points (240, 250).

4. The access control entity (220) according to Claim 3,
wherein the controller (221) is configured for selecting the first alternative access point (240) based on a prioritization of the alternative access points (240, 250).

5. The access control entity (220) according to Claim 3 or 4,
wherein the access information (201) further comprises information on a quality of radio signals of the alternative access points (240, 250); and
wherein the controller (221) is configured for selecting the first alternative access point (240) based on the respective qualities of the radio signals of the alternative access points (240, 250).

6. The access control entity (220) according to any one of Claims 2 to 5,
wherein the alternative access points (240, 250) designate other radio cells (140) or access points having a radio access technology (150) other than the mobile access point (230) used by the hybrid network access entity.

7. The access control entity (220) according to any one of the preceding claims,
wherein the access information (201) comprises a field strength, an output and/or a cell identification of the access points (230, 240, 250).

8. The access control entity (220) according to any one of the preceding claims,
wherein the second interface (222) is configured for receiving the overload information (202) if a loading of the radio cell (230) exceeds a settable threshold value.

9. The access control entity (220) according to any one of the preceding claims,
wherein the second interface (222) is configured for receiving respective further overload information from further radio cells (240);
and wherein the controller (221) is configured for prompting the hybrid network access entity (210), based on reception of further overload information, to route the data load to the communication network via an alternative access point (250) which does not coincide with the further radio cells (240).

10. The access control entity (220) according to any one of the preceding claims,
wherein the controller (221) is configured for prompting the hybrid network access entity (210) to re-route at least a portion of the data load to the communication network via the mobile access point (230) initially used by the hybrid network access entity (210) when a latency time after reception of the overload information (202) from the radio cell (230) has elapsed.

11. The access control entity (220) according to any one of the preceding claims,
wherein the respective items of access information further comprise information on a quality of radio signals to the mobile access points (230, 240) used; and
wherein the controller (221) is configured for determining which hybrid network entity is affected by the overload of the radio cell based on the respective items of access information.

12. An access control system (200) for controlling the access of a communication device to a communication network, having:
a hybrid network access entity (210), in particular a home gateway (110), which is configured for providing the communication device with the access to the communication network via a mobile phone connection and a fixed-line connection;
an access control entity (220), which is configured for receiving access information (201) from the hybrid network access entity (210) indicating a mobile access point (230) to the communication network, in particular a base station (130), used by the hybrid network access entity (210) and for receiving overload information (202) from a radio cell (230) indicating an overload of the radio cell (230),
wherein the access control entity (220) is configured for prompting the hybrid network access entity (210), based on reception of the overload information (202), to reduce a data load in the direction of the radio cell (230) if the radio cell (230) coincides with the mobile access point (230) to the communication network used by the hybrid network access entity (210); and
**characterized in that**
the access control system has further hybrid network access entities, which are configured for transmitting respective further items of access information, which indicate mobile access points (240) to the communication network used by the further hybrid network access entities, to the access control entity (210);
wherein the access control entity (220) is configured for selecting and prompting, based on reception of the access information and of the further access information, at least one corresponding hybrid network entity to reduce a data load in the direction of the radio cell (203).

13. A method (300) for controlling a hybrid network access entity (210), in particular a home gateway (110), which is configured for providing a communication device with an access to a communication network via a mobile phone network and a fixed-line network, wherein the method (300) comprises the following:
Reception (301) of access information (201) from the hybrid network access entity (210), which information indicates a mobile access point (230) to the communication network, in particular a base station (130), used by the hybrid network access entity;
Reception (302) of overload information (202) from a radio cell (230), which indicates an overload of the radio cell (230);
Transmission (303) of a prompt (203) to the hybrid network access entity (210), based on reception (302) of the overload information (202), to reduce a data load in the direction of the radio cell (230) if the radio cell (230) coincides with the mobile access point (230) to the communication network used by the hybrid network access entity (210);
**characterized in that** the method has the following steps:
Reception of respective items of access information from further hybrid network access entities, which items of access information indicate the mobile access points to the communication network used by the further hybrid network access entities;
Selection of at least one corresponding hybrid network entity based on reception of the access information (201) and of the further access information; and prompting of the selected at least one hybrid network entity to reduce a data load in the direction of the radio cell (230).

## Revendications

1. Entité de commande d'accès (220) pour la commande d'entités hybrides d'accès au réseau (210), dans laquelle
- les entités hybrides d'accès au réseau (210) sont conçues pour mettre à disposition d'un dispositif de communication un accès à un réseau de communication par une connexion radio mobile et une connexion à réseau fixe,
- l'entité de commande d'accès (220) comprend ce qui suit
- une première interface (223) avec une première entité hybride d'accès au réseau (210), cette première interface (223) étant conçue pour recevoir une information d'accès (201) qui indique un point d'accès mobile (230) au réseau de communication utilisé par la première entité hybride d'accès au réseau (210) ;
- une seconde interface (222) avec une cellule radio (230), cette seconde interface (222) étant conçue pour recevoir de la part de la cellule radio (230) une information de surcharge (202) qui indique une surcharge de la cellule radio (230) ;
- un contrôleur (221) qui est conçu pour, en se basant sur la réception de l'information de surcharge (202), demander à la première entité hybride d'accès au réseau (210) de réduire une charge de données en direction de la cellule radio (203) si la cellule radio (230) coïncide avec le point d'accès mobile (230) au réseau de communication utilisé par la première entité hybrides d'accès au réseau (210) ;
**caractérisée en ce que**
l'entité de commande d'accès possède d'autres premières interfaces avec d'autres entités hybrides d'accès au réseau, ces autres premières interfaces étant conçues pour recevoir des informations d'accès respectives qui indiquent des points d'accès mobiles au réseau de communication utilisés par les autres entités hybrides d'accès au réseau ;
- le contrôleur (221) étant conçu pour, en se basant sur la réception des informations d'accès (201) et des autres informations d'accès, sélectionner au moins une des autres entités hybrides d'accès au réseau et demander de réduire une charge de données en direction de la cellule radio (230).

2. Entité de commande d'accès (220) selon la revendication 1,
dans laquelle l'information d'accès (201) indique au moins un point d'accès alternatif (240,250) au point d'accès (230) au réseau de communication utilisé par l'entité hybride d'accès au réseau (210), en particulier une autre station de base (140) ou un point d'accès WLAN (150).

3. Entité de commande d'accès (220) selon la revendication 2,
dans laquelle le contrôleur (221) est conçu pour, en se basant sur la réception de l'information de surcharge (202), demander à l'entité hybride d'accès au réseau (210) de conduire la charge de données par un autre point d'accès alternatif (240) parmi les points d'accès alternatifs (240,250) au réseau de communication.

4. Entité de commande d'accès (220) selon la revendication 3,
dans laquelle le contrôleur (221) est conçu pour sélectionner le premier point d'accès alternatif (240) en se basant sur la priorisation des points d'accès alternatifs (240,250).

5. Entité de commande d'accès (220) selon la revendication 3 ou 4,
dans laquelle l'information d'accès (201) comprend en outre une information sur une qualité de signaux radio des points d'accès alternatifs (240,250) ; et
le contrôleur (221) est conçu pour sélectionner le premier point d'accès alternatif (240) en se basant sur les qualités respectives des signaux radio des points d'accès alternatifs (240,250).

6. Entité de commande d'accès (220) selon une des revendications 2 à 5,
dans laquelle les points d'accès alternatifs (240,250) désignent d'autres cellules radio (140) ou des points d'accès ayant une technologie d'accès radio (150) autre que celle du point d'accès mobile (230) utilisé par l'entité hybride d'accès au réseau.

7. Entité de commande d'accès (220) selon une des revendications précédentes,
dans laquelle l'information d'accès (201) comprend une intensité de champ, une puissance et/ou une identification de cellule des points d'accès (230,240,250).

8. Entité de commande d'accès (220) selon une des revendications précédentes,
dans laquelle la seconde interface (222) est conçue pour recevoir l'information de surcharge (202) si une charge de la cellule radio (230) dépasse une valeur seuil réglable.

9. Entité de commande d'accès (220) selon une des revendications précédentes,
dans laquelle la seconde interface (222) est conçue pour recevoir une autre information de surcharge respective de la part d'autre cellule radio (240) ;
et le contrôleur (221), en se basant sur la réception des autres informations de surcharge, demander à l'entité hybride d'accès au réseau (210) de conduire la charge de données au réseau de communication par un point d'accès alternatif (250) qui ne coïncide pas avec les autres cellules radio (240).

10. Entité de commande d'accès (220) selon une des revendications précédentes,
dans laquelle le contrôleur (221) est conçu pour, après un temps de latence suivant la réception de l'information de surcharge (202) de la cellule radio (230), demander à l'entité hybride d'accès au réseau (210) de conduire à nouveau au moins une partie de la charge de données par l'intermédiaire du point d'accès mobile (230) utilisé initialement par l'entité hybride d'accès au réseau (210) au réseau de communication.

11. Entité de commande d'accès (220) selon une des revendications précédentes,
dans laquelle les informations d'accès respectives comprennent en outre des informations sur une qualité de signaux radio vers les points d'accès mobiles utilisés (230,240) ; et
le contrôleur (221) est conçu pour, en se basant sur les informations d'accès respectives, définir quelle entité hybride de réseau est concernée par la surcharge de la cellule radio.

12. Système de commande d'accès (200) pour la commande de l'accès d'un dispositif de communication à un réseau de communication, comportant :
une entité hybride d'accès au réseau (210), en particulier une passerelle locale (110), qui est conçue pour mettre à disposition du dispositif de communication l'accès au réseau de communication par une connexion radio mobile et une connexion à réseau fixe ;
une entité de commande d'accès (220) qui est conçue pour recevoir de la part de l'entité hybride d'accès au réseau (210) une information d'accès (201) qui indique un point d'accès mobile (230) au réseau de communication utilisé par l'entité hybride d'accès au réseau (210), en particulier une station de base (130), et recevoir de la part d'une cellule radio (230) une information de surcharge (202) qui indique une surcharge de la cellule radio (230),
l'entité de commande d'accès (220) étant conçue pour, en se basant sur la réception de l'information de surcharge (202), demander à l'entité hybride d'accès au réseau (210) de réduire une charge de données en direction de la cellule radio (230) si la cellule radio (230) coïncide avec le point d'accès mobile (230) au réseau de communication utilisé par l'entité hybride d'accès au réseau (210) ; et
**caractérisé en ce que**
le système de commande d'accès présente d'autres entités hybrides d'accès au réseau qui sont conçues pour transmettre à l'entité de commande d'accès (210) d'autres informations d'accès respectives qui indiquent des points d'accès mobiles (240) au réseau de communication utilisés par les autres entités hybrides d'accès au réseau ;
l'entité de commande d'accès (220) est conçue pour, en se basant sur la réception des informations d'accès et les autres informations d'accès, sélectionner au moins une entité de réseau hybride correspondante et demander de réduire une charge de données en direction de la cellule radio (203).

13. Procédé (300) de commande d'une entité hybride d'accès au réseau (210), en particulier d'une passerelle locale (110), qui est conçue pour mettre à disposition d'un dispositif de communication un accès à un réseau de communication par une connexion radio mobile et une connexion à réseau fixe, ce procédé (300) comprenant ce qui suit :
réception (301) par l'entité hybrides d'accès au réseau (210) d'une information d'accès (201) qui indique un point d'accès mobile (230) au réseau de communication utilisé par l'entité hybride d'accès au réseau, en particulier une station de base (130) ;
réception (302) par une cellule radio (230) d'une information de surcharge (202) qui indique une surcharge de la cellule radio (230) ;
transmission (303) à l'entité hybride d'accès au réseau (210), en se basant sur la réception (302) de l'information de surcharge (202), d'une demande (203) de réduction d'une charge de données en direction de la cellule radio (230) si la cellule radio (230) coïncide avec le point d'accès mobile (230) au réseau de communication utilisé par l'entité hybride d'accès au réseau (210) ;
**caractérisé en ce que** ce procédé présente les étapes suivantes :
réception par d'autres entités hybrides d'accès au réseau d'informations d'accès respectives qui indiquent des points d'accès mobiles au réseau de communication utilisés par les autres entités hybrides d'accès au réseau ;
sélection d'au moins une entité hybride d'accès au réseau correspondante en se basant sur la réception des informations d'accès (201) et des autres informations d'accès ; et demande faite à l'au moins une entité de réseau hybride sélectionnée de réduction d'une charge de données en direction de la cellule radio (230).
